# FASCICULE DE BREVET EUROPEEN

(11) **EP 2 751 038 B1**
(45) Date de publication et mention de la délivrance du brevet: **06.11.2019**
(21) Numéro de dépôt: 12773116.4
(22) Date de dépôt: 27.08.2012
(51) Int. Cl.: C02F 9/00, C02F 1/20, C02F 1/24, C02F 3/06, C02F 1/00, C02F 101/32

(54) **PROCÉDÉ DE TRAITEMENT D'EAUX RÉSIDUAIRES CONTENANT DES HYDROCARBURES, EN PARTICULIER DES COMPOSÉS AROMATIQUES**
VERFAHREN ZUR BEHANDLUNG VON ABWASSER MIT KOHLENWASSERSTOFFEN, INSBESONDERE AROMATISCHEN VERBINDUNGEN
METHOD FOR TREATING WASTEWATER CONTAINING HYDROCARBONS, IN PARTICULAR AROMATIC COMPOUNDS

(30) Priorité: 30.08.2011 FR 1157626
(43) Date de publication de la demande: 09.07.2014
(73) Titulaire: SUEZ Eau Industrielle, 92040 Paris La Défense Cedex (FR)
(72) Inventeur: FUCHS, Cathy, F-Suresnes 92150 (FR); WALLIS, Craig, F-75015 Paris (FR); TOMMY-MARTIN, Benoît, F-75015 Paris (FR)
(74) Mandataire: IPAZ
(86) Numéro de dépôt international: PCT/IB2012/054386
(87) Numéro de publication internationale: WO 2013/030751

(56) Documents cités:
- GB-A- 2 474 559
- US-A- 4 857 198
- PHILLIPS J B: "Removal of benzene from industrial wastewater by vapor stripping", JOURNAL OF ENVIRONMENTAL SCIENCE AND HEALTH. PART A. TOXIC : HAZARDOUS SUBSTANCES & ENVIRONMENTAL ENGINEERING, NEW YORK : DEKKER, vol. 30, no. 5, 1 juin 1995 (1995-06-01), pages 1075-1090, XP009157312, ISSN: 0360-1226, DOI: 10.1080/10934529509376250 [extrait le 2008-12-15]
- WALDIE ET AL: "Removal of Dissolved Aromatics from Water", CHEMICAL ENGINEERING RESEARCH AND DESIGN, PART A, INSTITUTION OF CHEMICAL ENGINEERS, XX, vol. 76, no. 5, 1 juillet 1998 (1998-07-01), pages 562-570, XP022536388, ISSN: 0263-8762, DOI: 10.1205/026387698525243

## Description

L'invention concerne un procédé de traitement d'eaux résiduaires contenant des hydrocarbures du groupe de composés appelé BTEX contenant des composés aromatiques : benzène, toluène, éthylbenzène et xylènes (ortho, méta et para).

L'invention concerne des eaux résiduaires provenant d'une production ou d'un conditionnement de gaz naturel. Ces types d'eaux contiennent des composés qui ne sont pas compatibles avec un rejet direct au milieu naturel (rivière, lac ou mer). Les composés du groupe BTEX sont souvent présents en concentration importante, jusqu'à quelques grammes par litre, dans les eaux accompagnant la production ou le conditionnement du gaz naturel, et désignées pour simplifier par l'expression « eaux produites ». Ces composés étant volatils, il convient également d'éviter leur rejet dans l'atmosphère.

L'élimination de BTEX présents dans les eaux produites, provenant de la production ou du conditionnement du gaz naturel, est souvent basée sur un procédé utilisant adsorption ou absorption sur un milieu granulaire comme des argiles, des zéolites modifiées, des charbons actifs ou des matières organiques. Ce type de procédé nécessite une régénération ou un remplacement périodique des matériaux d'adsorption en raison de leur saturation par les hydrocarbures éliminés de l'eau.

Une technologie également utilisée actuellement consiste en un procédé connu sous le nom MPPE (macro porous polymer extraction - extraction par polymère macroporeux). Le procédé met en œuvre deux ou plusieurs colonnes contenant des lits de polymère granulaire. Le polymère agit comme un support pour un milieu d'extraction spécialement sélectionné pour sa capacité à absorber les hydrocarbures de la phase aqueuse. L'eau à traiter est introduite dans les colonnes et les hydrocarbures présents dans le flux d'eau sont éliminés par ce procédé d'absorption. Le groupe de composés BTEX est inclus dans les composés éliminés par ce procédé. Lorsqu'une colonne est saturée avec des hydrocarbures, il convient de procéder à une régénération de son matériau. La régénération est obtenue par injection de vapeur dans la colonne : les hydrocarbures sont dépouillés des granules de matériau support par la vapeur. Cette vapeur, qui sort contaminée avec les hydrocarbures, est ensuite condensée. Les hydrocarbures présents dans le condensat sont séparés physiquement par gravité et le concentré résultant est éliminé comme déchet, ou est recyclé. Du fait de ce besoin de régénération, il faut au minimum deux colonnes : une pour traiter l'eau, et une en régénération. Généralement, une colonne reste en phase de traitement pendant une heure environ et est ensuite régénérée pendant une heure.

Les phases de régénération compliquent les opérations de traitement. En outre, la pollution des eaux est déplacée de la phase aqueuse dans une autre phase, mais la question de son élimination subsiste.

D'après l'article de PHILLIPS J B : « Removal of benzene from industrial wastewater by vapor stripping » JOURNAL OF ENVIRONMENTAL SCIENCE AND HEALTH, PART A. TOXIC : HAZARDOUS SUBSTANCES & ENVIRONMENTAL ENGINEERING, NEW YORK : DEKKER, vol.30, n°5, 1 juin 1995 (1995-06-01) pages 1075-1090, on connaît un procédé de traitement d'eau résiduaire contenant du benzène à 1700 ppm (limite de saturation), procédé selon lequel l'eau résiduaire est soumise à un strippage par du gaz naturel. La pollution est retirée de l'eau par transfert dans le gaz, puis est éliminée lors de la combustion ultérieure du gaz. Le rapport massique du gaz de strippage à l'eau traitée est élevé, supérieur à 50% ce qui nécessite une dépense d'énergie élevée, peu compatible avec des traitements industriels relatifs à des débits d'eau polluée importants.

Le document Phillips et al. décrit un procédé de traitement des eaux via strippage au gaz naturel dans lequel le rapport massique du gaz de strippage à l'eau traitée est supérieur à 50%.

Le document US 4,857,198 décrit une installation pour le traitement des eaux via strippage au gaz naturel ainsi qu'un réacteur biologique aérobie.

L'invention a pour but, surtout, de fournir un procédé d'élimination des composés BTEX et plus généralement des hydrocarbures présents dans des eaux résiduaires destinées à être rejetées dans l'environnement naturel, qui permette, à moindre coût énergétique, d'obtenir un abattement de BTEX suffisant pour que l'eau strippée puisse être admise sur un traitement biologique pour affinage si nécessaire.

L'eau traitée peut être rejetée sans polluer la phase aqueuse, ni la phase gazeuse terrestre.

Selon l'invention, le procédé de traitement d'eau résiduaire contenant des hydrocarbures, en particulier des hydrocarbures du groupe de composés appelé BTEX comportant des composés aromatiques benzène, toluène, éthylbenzène et xylènes, cette eau résiduaire provenant notamment d'une production ou d'un conditionnement de gaz naturel, procédé selon lequel l'eau résiduaire est soumises à un strippage par du gaz naturel de sorte que la pollution d'hydrocarbures non seulement est retirée de l'eau par transfert dans le gaz, mais aussi est éliminée lors de la combustion ultérieure du gaz, est caractérisé en ce que :
- l'eau résiduaire qui entre dans le strippage présente une teneur en BTEX soluble inférieure ou égale à 1200 ppm, de préférence inférieure ou égale à 900 ppm,
- et le rapport massique du gaz de strippage à l'eau traitée est inférieur à 10%,
l'eau qui sort du strippage présentant une teneur en BTEX soluble inférieure ou égale à 30 ppm.

De préférence, le rapport massique du gaz de strippage à l'eau traitée est inférieur à 3%, de préférence inférieur à 2%.

Le gaz naturel de strippage peut être chargé en composés aromatiques, et présenter une teneur en BTEX comprise entre 1000 ppm (massique) et 15 000 ppm (massique).

D'une manière générale, les teneurs exprimées dans la description et les revendications sont des teneurs massiques.

Selon l'invention, avec un ratio gaz de strippage/ eau polluée relativement faible, inférieur à 10%, on obtient un abattement de BTEX suffisant (moins de 30 ppm dans l'eau strippée) de telle sorte que l'eau strippée puisse être admise sur un traitement biologique pour affinage si nécessaire.

Le procédé de traitement de l'invention part d'une eau polluée contenant au maximum 1200 ppm de BTEX soluble, et met en oeuvre un strippage au gaz avec un ratio massique inférieur à 10%, de préférence inférieur à 3%. De la sorte, après un strippage effectué même avec un gaz considéré comme « sale » qui présente une teneur en BTEX comprise entre 1000 ppm (massique) et 15 000 ppm (massique), l'eau contient moins de 30 ppm de BTEX soluble et peut ainsi être traitée par voie biologique, si on a besoin d'une qualité supérieure d'eau traitée, notamment contenant moins de 8 ppm de benzène.

Le gaz combustible de strippage peut aussi être constitué de gaz naturel « propre », c'est-à-dire qui présente une teneur en BTEX inférieure à 1000 ppm.

Le gaz naturel de strippage peut être celui de la production ou du conditionnement de gaz naturel dont proviennent les eaux résiduaires à traiter.

L'eau, après strippage, peut être soumise à un traitement biologique. Le traitement biologique peut être effectué en cultures fixées, ou en cultures mixtes, ou en cultures libres.

Une étape d'élimination de matières en suspension et des hydrocarbures insolubles résiduels est prévue entre le strippage et le traitement biologique. Cette élimination de matières en suspension et des hydrocarbures insolubles résiduels peut être réalisée par flottation, notamment dans un flottateur, en particulier à air.

Les boues du traitement biologique peuvent être recyclées à l'entrée de l'étape d'élimination de matières en suspension prévue entre le strippage et le traitement biologique.

Les boues de l'étape d'élimination de matières en suspension peuvent être soumises à une déshydratation et le liquide produit est recyclé à l'entrée de l'étape d'élimination de matières en suspension, tandis que les boues de déshydratation sont évacuées au rejet.

Le gaz qui a été utilisé pour le stripping de l'eau peut être recomprimé et renvoyé dans le circuit de distribution en vue de valoriser le pouvoir calorifique des BTEX extraits de l'eau.

Il est également décrit une installation de traitement d'eaux résiduaires contenant des hydrocarbures, en particulier des hydrocarbures du groupe de composés appelé BTEX, ces eaux résiduaires provenant notamment d'une production ou d'un conditionnement de gaz naturel, comportant un strippeur à gaz combustible, en particulier gaz naturel, dans lequel les eaux résiduaires sont soumises à un strippage, de sorte que la pollution d'hydrocarbures non seulement est retirée de l'eau par transfert dans le gaz, mais aussi est éliminée lors de la combustion ultérieure du gaz, caractérisée en ce qu'elle comporte un filtre biologique en aval du strippeur pour un traitement biologique de l'eau sortant du strippeur.

Dans l'installation, le gaz qui a été utilisé pour le stripping de l'eau peut être recomprimé et renvoyé dans le circuit de distribution en vue de valoriser le pouvoir calorifique des BTEX extraits de l'eau.

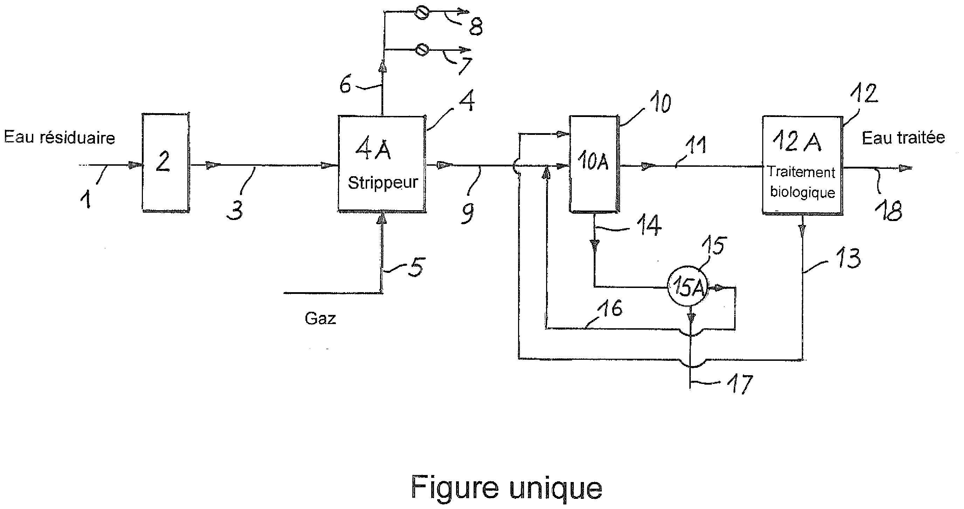

L'invention consiste, mises à part les dispositions exposées ci-dessus, en un certain nombre d'autres dispositions dont il sera plus explicitement question ci-après à propos d'un exemple de réalisation décrit avec référence au dessin annexé, mais qui n'est nullement limitatif.

L'invention est définie par les revendications annexées.

Sur le dessin: La figure unique est un schéma d'une installation mettant en œuvre le procédé de l'invention.

En se reportant à la figure du dessin on peut voir, schématiquement représentée, une installation de traitement d'eau résiduaire polluée arrivant par une conduite 1 en provenance d'une production de gaz naturel.

Cette eau, qui peut être présente dans du gaz extrait par forage souterrain ou sous-marin, est appelée « eau produite » pour simplifier la terminologie. L'eau peut également provenir d'un conditionnement de gaz naturel, notamment lors de sa compression ou de son stockage. Cette eau est chargée en hydrocarbures polluants, en particulier en hydrocarbures du groupe de composés appelé BTEX contenant des composés aromatiques : benzène, toluène, éthylbenzène et xylènes (ortho, méta et para). Ces composés sont souvent présents en concentration importante, inacceptable pour un rejet direct à l'environnement.

A titre d'exemple non limitatif, pour un rejet d'eau en mer, l'eau ne doit pas contenir plus de 8 ppm (8 parties par million) de benzène. Or, l'eau résiduaire admise par la conduite 1 peut contenir jusqu'à 660 ppm de benzène et jusqu'à 900 ppm de BTEX (Benzène ≤ 660 ppm ; BTEX ≤ 900 ppm), cet exemple n'étant pas limitatif.

Le débit d'eau à traiter peut être de l'ordre de 30 m³/h.

Une première étape facultative du traitement est assurée par un séparateur gravitaire 2 d'hydrocarbures insolubles. Le séparateur peut être du type API (American Petroleum Institute), ou CPI (séparateur à plaques ondulées) ou PPI (séparateur à plaques parallèles).

L'eau qui sort du séparateur 2 par une conduite 3 présente sensiblement la même teneur en polluants BTEX soluble qu'à l'entrée.

Selon l'invention, l'eau à traiter est ensuite introduite dans un strippeur 4A pour y subir un traitement de strippage 4 par un gaz combustible, en particulier du gaz naturel, introduit par une conduite 5. Le « strippage », ou désorption, consiste à extraire les gaz dissous dans l'eau pour les faire passer en phase gazeuse. Les gaz extraits de la phase liquide sont entraînés par un fort contre-courant de gaz combustible. Le strippeur est l'appareil qui permet de réaliser cette opération.

Le strippeur 4A est du type colonne à plateau ou à garnissage (anneau Pall ou similaire). Le choix du type de colonne est basé sur la teneur en polluants de l'eau brute : par exemple, la présence d'une quantité importante de matières en suspension favorise le choix d'une colonne à plateau.

Le gaz combustible est introduit sous pression en partie basse du strippeur 4A par une conduite 5 et est réparti sur toute la section transversale pour provoquer un bullage dans l'eau à traiter qui remplit le strippeur 4A.

Les bulles de gaz en montant dans l'eau se chargent en composés BTEX et autres polluants de l'eau. Le gaz contaminé par les composés BTEX, transférés à partir de l'eau traitée, sort du strippeur 4A par une conduite 6.

La pression du gaz injecté par la conduite 5 peut être de l'ordre de 5 à 6 bars, notamment 5,5 bars. Le gaz contaminé sortant par la conduite 6 se trouve à une pression relative réduite, notamment inférieure à 0.5 bar, de l'ordre de 0.4 bar.

D'une manière surprenante, un strippage efficace est obtenu avec du gaz naturel « sale », c'est-à-dire chargé en composés aromatiques, et qui présente une teneur en BTEX comprise entre 1000 ppm et 15 000 ppm .

Bien entendu, le gaz combustible injecté par la conduite 5 peut être du gaz naturel « propre », c'est-à-dire un gaz dont la teneur en BTEX est inférieure à 1000 ppm.

Avantageusement, le gaz naturel de strippage est celui de la production ou du conditionnement de gaz naturel dont proviennent les eaux résiduaires à traiter.

Le rapport massique du gaz de strippage à l'eau à traiter est généralement inférieur à 3%, de préférence inférieur à 2%. Ainsi, pour traiter un débit d'eau de 28m³/h, le débit massique de gaz peut être de 350kg/h, soit environ 1.25%.

Le gaz contaminé sortant par la conduite 6 peut présenter une teneur massique en BTEX supérieure à 60 000 ppm (soixante mille ppm).

Le gaz contaminé peut être dirigé par une conduite 7 commandée par une vanne vers un recyclage, après compression, dans l'installation de production de gaz, ou par une conduite 8, également commandée par une vanne, vers une torchère.

Ainsi, selon l'invention, le strippage de l'eau polluée, dans le strippeur 4, par du gaz combustible permet non seulement de dépolluer l'eau notamment de ses composés BTEX, mais aussi d'éliminer ces composés BTEX lors de la combustion ultérieure du gaz soit dans une torchère, soit lors de l'utilisation du gaz.

L'eau qui sort du strippeur 4 dans une conduite 9 présente une teneur en BTEX soluble inférieure ou égale à 30 ppm, de préférence inférieure ou égale à 20 ppm tandis que sa teneur en benzène est inférieure ou égale à 15 ppm, de préférence inférieure ou égale à 12 ppm, lorsque le gaz utilisé est sale. Avec un gaz propre, l'eau qui sort du strippeur 4 présente une teneur en BTEX soluble inférieure à 10ppm.

Dans les premiers étages du traitement, l'eau est maintenue à l'abri de l'air pour éviter que les BTEX ne s'échappent dans l'atmosphère extérieure.

L'eau sortant par la conduite 9 est avantageusement soumise à une étape supplémentaire 10 de traitement visant à réduire encore les matières en suspension et/ou les hydrocarbures insolubles résiduels. Cette étape supplémentaire 10 peut être du type :
- décantation,
- flottation,
- filtration,
- nouveau strippage, en particulier à l'azote.
Avantageusement, l'étape 10 est réalisée dans un flottateur 10A.

Cette étape supplémentaire 10 est facultative et dépend de la qualité de l'eau en sortie du strippeur 4, de la qualité du gaz injecté par la conduite 5 et des normes de rejet acceptables dans l'environnement.

L'eau sortant de l'étape supplémentaire 10 est dirigée par une conduite 11 vers une étape 12 d'élimination par un traitement biologique, dans un filtre biologique 12A, des composés organiques solubles restant dans l'eau.

Le traitement biologique de l'étape 12 peut être constitué par :
- un procédé à cultures fixées: typiquement un filtre biologique 12A, en particulier du genre BIOFOR®, à savoir un réacteur biologique à cultures fixées sur un matériau monocouche fixe et immergé, à base d'argile expansée,
- ou un procédé à cultures mixtes (libres et fixées), typiquement un réacteur biologique à cultures libres en mélange avec des cultures fixées sur des supports plastiques flottants ;
- ou un procédé à cultures libres : boues activées ou réacteur biologique à membranes.

Avantageusement, les boues issues du traitement biologique de l'étape 12 sont dirigées par une conduite 13 à l'entrée de l'étape 10 pour être recyclées.

Les boues issues de l'étape 10 peuvent être dirigées par une conduite 14 jusqu'à une centrifugeuse 15A pour y subir un traitement de centrifugation 15 qui donne un centrat liquide recyclé par une conduite 16 à l'entrée de l'étape 10. Le sédiment ou culot issu de la centrifugation est évacué au rejet par une conduite 17.

Les recyclages assurés par les conduites 13 et 16, en combinaison avec la centrifugeuse 15A, permettent de n'avoir qu'une seule sortie de rejet au niveau de la conduite 17, ce qui simplifie sensiblement l'installation.

L'eau traitée sort de l'étape de traitement biologique 12 par une conduite 18 et peut être rejetée au milieu naturel.

La structure précise de la ligne de traitement est fonction de la qualité de l'eau brute à traiter introduite par la conduite 1 et des normes s'appliquant à la qualité d'eau à rejeter.

La présence d'un séparateur 2 d'hydrocarbures insolubles est déterminée selon la quantité des huiles et graisses présentes dans l'eau à traiter.

La présence de l'étape de séparation 10 pour l'élimination de matériau en suspension dépend du type de traitement biologique sélectionné pour l'étape 12 et de la qualité de l'eau brute. Un traitement biologique par cultures libres, prévu à l'étape 12, pourra accepter une charge plus importante en matières en suspension que des traitements par cultures fixes.

Le choix du traitement biologique, lors de l'étape 12, est généralement effectué selon la pollution soluble restant dans l'eau en aval du strippeur 4A. On notera que cette pollution soluble est faible dans le cas de l'utilisation du MEG (traitement au Mono Ethylène Glycol), ou bien est forte dans le cas de l'utilisation du méthanol, dans le procédé de production ou de conditionnement du gaz naturel.

Le strippage des BTEX de l'eau produite par un flux de gaz combustible, en particulier de gaz naturel, est essentiel selon l'invention, et est avantageusement combiné avec les autres étapes de traitement, en particulier un traitement biologique lors de l'étape 12 pour les eaux destinées au rejet au milieu naturel.

### EXEMPLE

Un exemple d'installation mettant en œuvre le procédé de l'invention est proposé pour un terminal de production de gaz naturel. L'eau à traiter provient de la production et du conditionnement du gaz. La qualité de l'eau à traiter est de l'ordre de :
- 100 mg/L de matières en suspension,
- 900 mg/L de BTEX solubles (dans les eaux produites),
- 600 mg/L d'hydrocarbures insolubles (BTEX inclus provenant des eaux produites).

L'objectif est d'obtenir une qualité d'eau traitée (pour un rejet à la mer) de :
- BTEX total < 0,4 ppm (ou 400 ppb - partie par billion),
- Demande biologique en oxygène (DBO) < 30 mg/L,
- Demande chimique en oxygène (DCO) < 160 mg/L,
- Matières en suspension < 30 mg/L.

La ligne de traitement proposée dans ce cas est la suivante :
- élimination des hydrocarbures insolubles par un séparateur 2 CPI (corrugated plate interceptor - séparateur à plaques ondulées);
- strippeur 4A sous forme de colonne de strippage de BTEX par gaz naturel. Dans ce cas, une colonne de garnissage est proposée du fait que l'eau n'est pas trop chargée en matériau en suspension. Le gaz contaminé sortant de la colonne est recyclé par la conduite 7 vers l'installation de production du gaz. Le strippage peut réduire la concentration de BTEX totale à 20 ppm dans ce cas ;

- une unité de flottation 10A pour éliminer les hydrocarbures insolubles résiduels et les matériaux en suspension présents dans l'eau. En amont de l'unité de flottation 10A, des étapes de coagulation et de floculation peuvent être prévues pour convertir les hydrocarbures et les solides en forme compatible avec la séparation par flottation. Cette flottation elle-même, lors de l'étape 10, est réalisée par injection de microbulles d'air dans l'eau floculée à l'entrée de l'unité de flottation ;
- pour le traitement biologique 12, un filtre biologique 12A (type BIOFOR®) pour l'élimination de la pollution organique soluble restant dans l'eau. Les boues biologiques générées par ce filtre sont avantageusement recyclées par la conduite 13 en amont de l'étape de flottation 10 pour traitement ;
- rejet à la mer de l'eau traitée sortant par la conduite 18.

L'invention est également applicable dans les cas suivants :
- élimination des hydrocarbures volatils présents dans des eaux produites provenant d'un champ de production pétrolier,
- élimination de BTEX ou des hydrocarbures volatils présents dans des eaux résiduaires provenant d'une raffinerie de pétrole,
- élimination de BTEX ou des composés organiques volatils présents dans des eaux résiduaires provenant d'une usine de pétrochimie.

D'une manière générale, l'invention concerne le cas où les eaux à traiter sont destinées au rejet au milieu naturel, mais reste applicable aux cas où la réutilisation de l'eau traitée par le procédé de l'invention est envisagée.

## Revendications

1. Procédé de traitement d'eau résiduaire contenant des hydrocarbures, du groupe de composés appelé BTEX comportant des composés aromatiques benzène, toluène, éthylbenzène et xylènes, cette eau résiduaire provenant d'une production ou d'un conditionnement de gaz naturel, procédé selon lequel l'eau résiduaire est soumise à un strippage par du gaz naturel de sorte que la pollution d'hydrocarbures non seulement est retirée de l'eau par transfert dans le gaz, mais aussi est éliminée lors de la combustion ultérieure du gaz,
- l'eau résiduaire entrant dans le strippage présente une teneur en BTEX soluble inférieure ou égale à 1200 ppm, de préférence inférieure ou égale à 900 ppm,
l'eau qui sort du strippeur présentant une teneur en BTEX soluble inférieure ou égale à 30 ppm,
**caractérisé en ce que** le rapport massique du gaz de strippage à l'eau traitée est inférieur à 10%,
et **caractérisé en ce que** le gaz naturel de strippage est chargé en composés aromatiques, et présente une teneur en BTEX comprise entre 1000 ppm (massique) et 15 000 ppm (massique).

2. Procédé selon la revendication 1, dans lequel le rapport massique du gaz de strippage à l'eau traitée est inférieur à 3%, de préférence inférieur à 2%.

3. Procédé selon la revendication 1 ou 2, dans lequel le gaz naturel de strippage est celui de la production ou du conditionnement de gaz naturel dont proviennent les eaux résiduaires à traiter.

4. Procédé selon l'une quelconque des revendications précédentes, dans lequel l'eau, après strippage (4), est soumise à un traitement biologique (12).

5. Procédé selon la revendication 4, dans lequel le traitement biologique (12) est effectué en cultures fixées, ou en cultures mixtes, ou en cultures libres.

6. Procédé selon l'une des revendications 1 à 4, dans lequel une étape (10) d'élimination de matières en suspension et des hydrocarbures résiduels est prévue entre le strippage (4) et le traitement biologique (12).

7. Procédé selon la revendication 6, dans lequel les boues du traitement biologique (12) sont recyclées à l'entrée de l'étape (10) d'élimination de matières en suspension prévue entre le strippage (4) et le traitement biologique (12).

8. Procédé selon la revendication 6, dans lequel les boues de l'étape (10) d'élimination de matières en suspension sont soumises à une déshydratation (15) et le liquide produit est recyclé (16) à l'entrée de l'étape (10) d'élimination de matières en suspension, tandis que les boues de déshydratation sont évacuées (17) au rejet.

9. Procédé selon l'une quelconque des revendications précédentes, dans lequel le gaz ayant été utilisé pour le stripping de l'eau est recomprimé et renvoyé dans le circuit de distribution en vue de valoriser le pouvoir calorifique des BTEX extraits de l'eau.

## Patentansprüche

1. Verfahren zur Behandlung von Abwasser, welches Kohlenwasserstoffe der als BTEX bezeichneten Verbindungen, welche aromatische Verbindungen von Benzol, Toluol, Ethylbenzol und Xylolen umfassen, aufweist, wobei dieses Abwasser aus einer Erdgasproduktion oder -konditionierung stammt, wobei nach dem Verfahren das Abwasser einem Strippen durch Erdgas unterzogen wird, derart, dass die Kohlenwasserstoff-Verunreinigung nicht nur durch Übertragung in das Gas aus dem Wasser abgezogen wird, sondern auch bei der späteren Verbrennung des Gases eliminiert wird,
- wobei das in den Stripper eintretende Abwasser einen Gehalt an löslichem BTEX aufweist, der geringer als oder gleich 1200 ppm, vorzugsweise geringer als oder gleich 900 ppm ist,
wobei das aus dem Stripper austretende Wasser einen Gehalt an löslichem BTEX aufweist, der geringer als oder gleich 30 ppm ist,
**dadurch gekennzeichnet, dass** das Gewichtsverhältnis des Stripping-Gases zu dem behandelten Wasser geringer als 10% ist,
und **dadurch gekennzeichnet, dass** das Stripping-Erdgas mit aromatischen Verbindungen angereichert ist und einen Gehalt an BTEX zwischen 1000 ppm (massebezogen) und 15000 ppm (massebezogen) aufweist.

2. Verfahren nach Anspruch 1, bei welchem das Gewichtsverhältnis des Stripping-Gases zu dem behandelten Wasser kleiner als 3%, vorzugsweise kleiner als 2% ist.

3. Verfahren nach Anspruch 1 oder 2, bei welchem das Stripping-Erdgas das Gas aus der Erdgasproduktion oder -konditionierung ist, aus welcher die zu behandelnden Abwässer stammen.

4. Verfahren nach einem der vorhergehenden Ansprüche, bei welchem das Wasser nach dem Strippen (4) einer biologischen Behandlung (12) unterzogen wird.

5. Verfahren nach Anspruch 4, bei welchem die biologische Behandlung (12) in festgelegten Kulturen oder in gemischten Kulturen oder in freien Kulturen durchgeführt wird.

6. Verfahren nach einem der Ansprüche 1 bis 4, bei welchem eine Stufe (10) des Eliminierens von Schwebstoffen und restlichen Kohlenwasserstoffen zwischen dem Strippen (4) und der biologischen Behandlung (12) vorgesehen ist.

7. Verfahren nach Anspruch 6, bei welchem die Schlämme der biologischen Behandlung (12) zu dem Einlass der Stufe (10) des Eliminierens von Schwebstoffen, die zwischen dem Strippen (4) und der biologischen Behandlung (12) vorgesehen ist, zurückgeführt werden.

8. Verfahren nach Anspruch 6, bei welchem die Schlämme der Stufe (10) des Eliminierens von Schwebstoffen einer Dehydration (15) unterzogen werden, und die erzeugte Flüssigkeit zu dem Einlass der Stufe (10) des Eliminierens von Schwebstoffen zurückgeführt (16) wird, während die Dehydrationsschlämme in den Ablauf abgeführt (17) werden.

9. Verfahren nach einem der vorhergehenden Ansprüche, bei welchem das für das Strippen des Wassers verwendete Gas erneut komprimiert und in den Verteilkreis zurückgeleitet wird, um den Heizwert der aus dem Wasser extrahierten BTEX zu nutzen.

## Claims

1. A process for treating wastewater hydrocarbons from the group of compounds referred to as BTEX, comprising benzene, toluene, ethylbenzene and xylene aromatic compounds, this wastewater originating in particular from the production or conditioning of natural gas, according to which process the wastewater is subjected to stripping by natural gas such that the hydrocarbon pollution is not only removed from the water by transfer into the gas, but is also eliminated during the subsequent combustion of the gas,
- the wastewater entering the stripping has a soluble BTEX content of less than or equal to 1200 ppm, preferably less than or equal to 900 ppm,
- the water which leaves the stripper having a soluble BTEX content of less than or equal to 30 ppm,
**characterized in that** the weight ratio of the stripping gas to the treated water is less than 10% and
**characterized in that** the stripping natural gas is loaded with aromatic compounds, and has a BTEX content of between 1000 ppm (by weight) and 15 000 ppm (by weight).

2. The process as claimed in claim 1, **characterized in that** the weight ratio of the stripping gas to the treated water is less than 3%, preferably less than 2%.

3. The process as claimed in claim 1 or 2, **characterized in that** the stripping natural gas is the gas from the production or conditioning of natural gas from which the wastewater to be treated originates.

4. The process as claimed in any one of the preceding claims, **characterized in that** the water, after stripping (4), is subjected to a biological treatment (12).

5. The process as claimed in claim 4, **characterized in that** the biological treatment (12) is carried out in fixed cultures, or in mixed cultures, or in free cultures.

6. The process as claimed in one of claims 1 to 4, **characterized in that** a step (10) for removing suspended matter and the residual hydrocarbons is provided for between the stripping (4) and the biological treatment (12).

7. The process as claimed in claim 6, **characterized in that** the sludge from the biological treatment (12) is recycled to the entry of the step (10) for removing suspended matter which is provided for between the stripping (4) and the biological treatment (12).

8. The process as claimed in claim 6, **characterized in that** the sludge from the step (10) for removing suspended matter is subjected to a dehydration (15) and the liquid produced is recycled (16) to the entry of the step (10) for removing suspended matter, while the dehydration sludge is evacuated (17) to the discharge.

9. The process as claimed in any one of the preceding claims, **characterized in that** the gas having been used for the stripping of the water is recompressed and sent back to the distribution circuit with a view to exploiting the calorific value of the BTEXs extracted from the water.
